(19) **Europäisches Patentamt / European Patent Office / Office européen des brevets**

(11) **EP 4 629 702 A1**

(12) **EUROPEAN PATENT APPLICATION**
published in accordance with Art. 153(4) EPC

(43) Date of publication:
**08.10.2025 Bulletin 2025/41**

(21) Application number: **23925066.5**

(22) Date of filing: **12.12.2023**

(51) International Patent Classification (IPC):
*H04W 48/10* $^{(2009.01)}$   *H02J 50/20* $^{(2016.01)}$

(52) Cooperative Patent Classification (CPC):
**H02J 50/20; H04W 48/10; H04W 52/14; H04W 74/0833**

(86) International application number:
**PCT/CN2023/138142**

(87) International publication number:
**WO 2024/179121 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2023   CN 202310237087**

(71) Applicant: **ZTE Corporation**
**Shenzhen, Guangdong  518057 (CN)**

(72) Inventors:
• **SI, Yuan**
  **Shenzhen, Guangdong 518057 (CN)**
• **ZHANG, Shujuan**
  **Shenzhen, Guangdong 518057 (CN)**
• **DAI, Bo**
  **Shenzhen, Guangdong 518057 (CN)**
• **BI, Feng**
  **Shenzhen, Guangdong 518057 (CN)**

(74) Representative: **Aipex B.V.**
**Vestdijk 51**
**5611 CA Eindhoven (NL)**

(54) **WIRELESS ENERGY TRANSMISSION METHOD AND APPARATUS, COMMUNICATION DEVICE, AND STORAGE MEDIUM**

(57) Provided are a wireless energy transmission method and apparatus, a communication device and a storage medium. The method includes: transmitting an access request signal to a second code; and receiving a response signal from the second node. At least one of the access request signal or the response signal carries energy transmission related information.

| Transmit an access request signal to a second node | 110 |
|---|---|
| Receive a response signal from the second node, where the access request signal and/or the response signal carry energy transmission related information | 120 |

**FIG. 1**

EP 4 629 702 A1

**Description**

TECHNICAL FIELD

The present application relates to the field of wireless communication network technology, for example, a wireless energy transmission method and apparatus, a communication device and a storage medium.

BACKGROUND

Wireless energy transmission refers to a process of transmitting energy from a wireless energy transmitting device to a wireless energy receiving device. In a wireless energy transmission process of the related art, a wireless energy transmitting device transmits an energy signal to a wireless energy receiving device after receiving a request from the wireless energy receiving device. However, the transmission between the two devices may not be synchronous. Since the performance of the two devices is different, there is a gap in ability to transmit energy and the transmission parameters used may not match, the efficiency of wireless energy transmission is affected, and the flexibility of wireless energy transmission is poor.

SUMMARY

The present application provides a wireless energy transmission method and apparatus, a communication device and a storage medium.
Embodiments of the present application provide a wireless energy transmission method. The wireless energy transmission method is applied to a first node and includes the following.
An access request signal is transmitted to a second node.
A response signal from the second node is received.
At least one of the access request signal or the response signal carries energy transmission related information.
Embodiments of the present application further provide a wireless energy transmission method. The wireless energy transmission method is applied to a second node and includes the following.
An access request signal from a first node is received.
A response signal is transmitted to the first node according to the access request signal.
At least one of the access request signal or the response signal carries energy transmission related information.
Embodiments of the present application further provide a wireless energy transmission apparatus. The wireless energy transmission apparatus includes a request module and a response receiving module.
The request module is configured to transmit an access request signal to a second node.
The response receiving module is configured to receive a response signal from the second node.
At least one of the access request signal or the response signal carries energy transmission related information.
Embodiments of the present application further provide a wireless energy transmission apparatus. The wireless energy transmission apparatus includes a request receiving module and a response module.
The request receiving module is configured to receive an access request signal from a first node.
The response module is configured to transmit a response signal to the first node according to the access request signal.
At least one of the access request signal or the response signal carries energy transmission related information.
Embodiments of the present application further provide a communication device. The communication device includes a memory, a processor and a computer program stored in the memory and executable by the processor. When executed by the processor, the program causes the processor to implement the preceding wireless energy transmission method.
Embodiments of the present application further provide a computer-readable storage medium storing a computer program which, when executed by a processor, causes the processor to implement the preceding wireless energy transmission method.

BRIEF DESCRIPTION OF DRAWINGS

FIG. 1 is a flowchart of a wireless energy transmission method according to an embodiment.

FIG. 2 is a schematic diagram illustrating resource partition according to an embodiment.

FIG. 3 is a schematic diagram of an energy replenishment process according to an embodiment.

FIG. 4 is a schematic diagram of control information according to an embodiment.

FIG. 5 is a schematic diagram of a four-step link establishment process according to an embodiment.

FIG. 6 is a schematic diagram of a two-step link establishment process according to an embodiment.

FIG. 7 is a schematic diagram illustrating the wireless energy transmission between a UE and a base station according to an embodiment.

FIG. 8 is a schematic diagram illustrating the correspondence between a beam and a random access resource set.

FIG. 9 is another schematic diagram illustrating the wireless energy transmission between a UE and a base station according to an embodiment.

FIG. 10 is a schematic diagram of an energy replenishment process according to an embodiment.

FIG. 11 is a flowchart of another wireless energy transmission method according to an embodiment.

FIG. 12 is a structure diagram of a wireless energy transmission apparatus according to an embodiment.

FIG. 13 is a structure diagram of another wireless energy transmission apparatus according to an embodiment.

FIG. 14 is a structure diagram of hardware of a communication device according to an embodiment.

DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

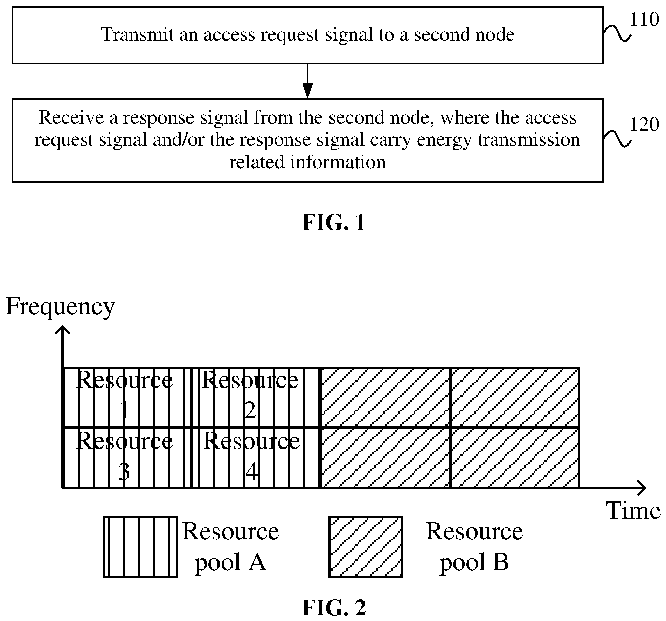

FIG. 1 is a flowchart of a wireless energy transmission method according to an embodiment. As shown in FIG. 1, the method in this embodiment includes the following.

In step 110, an access request signal is transmitted to a second node.

In step 120, a response signal from the second node is received.

A process of wireless energy transmission mainly includes two parts: access (link establishment) and energy replenishment (energy transmission). In the access process, a first node transmits the access request signal to the second node, and the second node transmits the response signal to the first node. The first node may be a wireless energy receiving device, for example, a user equipment (UE). The second node may be a base station or a wireless energy transmitting device. For example, if a UE transmits an access request signal to a base station A, the base station A may transmit a response signal to the UE and transmit an energy signal to the UE, or the base station A may also control another wireless energy transmitting device (for example, a base station B) to perform wireless energy transmission with the UE.

In this embodiment, the access request signal and/or the response signal carry energy transmission related information. By carrying the energy transmission related information in the access request signal and/or the response signal, parameters between the energy transmitting and receiving devices can be matched, thereby performing efficient and flexible energy transmission.

In an embodiment, the energy transmission related information carried by the access request signal includes at least one of: an energy transmission request signal, an energy transmission termination signal or an energy transmission parameter.

In this embodiment, the energy transmission request signal is used for requesting the wireless energy transmitting device to transmit an energy signal; the energy transmission termination signal is used for instructing the wireless energy transmitting device to stop transmitting an energy signal; for the wireless energy receiving device, the energy transmission parameter may represent the expected transmission configuration of the wireless energy receiving device such as an expected transmit power, an expected transmit bandwidth, an expected transmit frequency, expected energy replenishment time and/or an expected transmit waveform (a pulse or a continuous wave), or may be a specific configuration parameter such as a transmit power, a transmit waveform, a transmit bandwidth, a transmit frequency and a transmit time domain position; for the wireless energy transmitting device, the energy transmission parameter may represent a transmission capability supported by the wireless energy transmitting device such as a maximum transmit power, a transmit waveform set, a transmit bandwidth set, a carrier frequency set and a transmission period set, or may be transmit information of an energy signal such as a transmit power, a transmit waveform, a transmit bandwidth, a transmit frequency, a transmit time domain position and measurement signal configuration information.

In an embodiment, the energy transmission related information carried by the access request signal is explicitly or implicitly carried in the access request signal.

In this embodiment, the energy transmission related information carried by the access request signal may be explicitly carried in the access request signal or implicitly carried in the access request signal. For example, in the case where an energy transmission request signal is explicitly carried, one bit may be used for indicating a need for energy transmission, and in the case where an energy transmission request signal is implicitly carried, an access request signal transmitted on a particular time-frequency resource may be considered as needing energy transmission. FIG. 2 is a schematic diagram illustrating resource partition according to an embodiment. As shown in FIG. 2, an access request signal transmitted in a resource pool A may be considered as needing energy transmission.

In an embodiment, the energy transmission related information carried by the response signal includes at least one of: an energy transmission parameter or an energy transmission rejection message.

In this embodiment, the response signal may carry the energy transmission parameter. In this case, after receiving a response message, the first node can know whether it can receive an energy signal transmitted by the wireless energy transmitting device, and carry a response to whether energy transmission is performed in an access request signal, and information such as an expected transmit power, a transmit waveform, a transmission period and/or a transmit bandwidth may be carried.

In an embodiment, the second node may also transmit a request for energy transmission in a form of a physical uplink control channel (PUCCH), a scheduling request (SR) or uplink control information (UCI) after successful access.

In an embodiment, the energy transmission related information includes the energy transmission parameter; the energy transmission parameter includes at least one of the following information: an expected transmit power, an expected transmit bandwidth, an expected transmit frequency, expected energy replenishment time or an expected transmit waveform; the energy transmission parameter is explicitly or implicitly carried in the access request signal.

In an embodiment, the energy transmission related information includes the energy transmission parameter; the energy transmission parameter includes at least one of the following transmit information of an energy signal: a transmit power, a transmit waveform, a transmit bandwidth, a transmit frequency or a transmit time domain position; the energy transmission parameter is explicitly or implicitly carried in the access request signal.

In an embodiment, the energy transmission related information includes the energy transmission parameter; the energy transmission parameter includes at least one of the following transmit-related information: a maximum transmit power, a transmit waveform set, a transmit bandwidth set, a carrier frequency set or a transmission period set; the energy transmission related information is explicitly or implicitly carried in the response signal.

In an embodiment, the energy transmission related information includes the energy transmission parameter; the energy transmission parameter includes at least one of the following transmit information of an energy signal: a transmit power, a transmit waveform, a transmit bandwidth, a transmit frequency or a transmit time domain position or measurement signal configuration information; the energy transmission related information is explicitly or implicitly carried in the response signal.

In this embodiment, the energy transmission parameter may be explicitly or implicitly carried in the access request signal or the response signal. For the case of explicit carrying, the energy transmission parameter may be represented by multiple bits, and for the case of implicit carrying, the corresponding energy transmission parameter may be reflected by a time-frequency resource for transmitting the access request signal and/or the response signal.

In an embodiment, mapping exists between the energy transmission parameter and a transmission resource.

Table 1 is a table illustrating the mapping between time-frequency resources and energy transmission parameters. As shown in Table 1, for example, for the wireless energy transmitting device, response signals transmitted by the wireless energy transmitting device on different resources can represent transmission capabilities of the wireless energy transmitting device. For example, transmitting on the resource 1 represents that the maximum transmit power is P1, the optional waveform set is S1, the supported transmission period set is T1, the supported transmit bandwidth set is B1 and the supported carrier frequency set is F1, and transmitting on the resource 2 represents that the maximum transmit power is P2, the optional waveform set is S2, the supported transmission period set is T2, the supported transmit bandwidth set is B2 and the supported carrier frequency set is F2. Access request signals transmitted by the wireless energy receiving device on different resources may correspond to expected different wireless energy transmission configurations expected by the wireless energy receiving device. For example, transmitting on the resource 1 represents that the wireless energy receiving device expects the wireless energy transmitting device to use the power p1 for transmission, the transmit waveform is s1, the transmit bandwidth is b1, the transmission period is t1 and the transmit frequency is f1. The resource 1, the resource 2, the resource 3 and the resource 4 in the table are only for illustration. The transmission resources of the wireless energy transmitting device and the wireless energy receiving device may be the same or different.

Table 1 Correspondence table of time-frequency resources and energy transmission parameters

| Time-frequency Resource / Communication Device | resource 1 | resource 2 | resource 3 | resource 4 |
|---|---|---|---|---|
| wireless energy transmitting device | transmission capability 1 | transmission capability 2 | transmission capability 3 | transmission capability 4 |
| wireless energy receiving device | expected wireless energy transmission | expected wireless energy transmission | expected wireless energy transmission | expected wireless energy transmission |

|  | configuration 1 | configuration 2 | configuration 3 | configuration 4 |
|---|---|---|---|---|

In an embodiment, the method further includes the content described below.

In step 130, a measurement signal is transmitted according to the measurement signal configuration information. The measurement signal may be used for periodic channel measurement.

In an embodiment, the method further includes the content described below.

In step 140, the response signal is not received after the access request signal is transmitted, and the access request signal is retransmitted after a first duration.

In step 150, the response signal is not received after the number of retransmissions of the access request signal reaches the preset number, the access request signal is retransmitted again after a second duration, or accessing the node is abandoned.

In this embodiment, if the first node does not receive the response signal transmitted from the second node after transmitting the access request signal, the first node retransmits the access request signal after a first duration (T1), and the above process is repeated; if the response signal is still not received after the access request signal is retransmitted for the preset number (N), the first node retransmits the access request signal again after a second duration (T2).

In an embodiment, the method further includes the content described below.

In step 160, the first duration, the second duration and the preset number are determined according to at least one of a broadcast system message or control signaling. In this embodiment, the first node may obtain the first duration, the second duration and the preset number from the broadcast system message or may acquire the first duration, the second duration and the preset number from the control signaling. The control signaling may be radio resource control (RRC) signaling, media access control-control element (MAC-CE) or downlink control information (DCI).

In an embodiment, the access request signal further carries identifier information, and the identifier information includes at least one of: an identity authentication message of the first node, terminal identifier information or terminal energy acquisition identifier information. In this embodiment, the access request signal may carry the identifier information of the first node for the authentication and identity authentication of the wireless energy receiving device.

In an embodiment, if the identifier information in a response message corresponding to the access request signal is consistent with the identifier information carried by the access request signal, the access is successful.

In an embodiment, the access request signal carries a reference signal.

In this embodiment, the access request signal may carry the reference signal for helping the wireless energy transmitting device to perform beam training. The reference signal is a signal form agreed upon by the energy transmitting and receiving devices and may be, for example, an uplink channel sounding reference signal (SRS) in Long-Term Evolution (LTE) or 5GNR.

In an embodiment, the method further includes: a manner of transmitting the reference signal is determined according to configuration signaling of the second node.

In this embodiment, the manner of transmitting the reference signal is notified to the first node by the second node through the configuration signaling. The configuration signaling may be RRC signaling, MAC-CE or DCI.

In an embodiment, precoding of an energy signal is determined by the second node according to a channel matrix determined based on a reference signal or determined according to a resource for transmitting the access request signal.

In an embodiment, the method further includes the content described below.

In step 170, the response signal is successfully received, transmit information of an energy signal is acquired, and the energy signal is received according to the transmit information.

In an embodiment, the access request signal includes at least one of: a Msg1 transmitted in a physical random access channel (PRACH); a Msg3 transmitted in the PRACH; a MsgA transmitted in the PRACH; a 6th generation mobile communication (6G) access signal; or a 6G access message. The access request signal can be transmitted multiple times, and the energy transmission request signal can be carried on any access request signal. The PRACH may be used for establishing only an energy transmission link or may be used for establishing a communication link and an energy transmission link. The Msg1, the Msg2, the Msg3 and the Msg4 correspond to system messages in a four-step link establishment process, and the MsgA and the MsgB correspond to system messages in a two-step link establishment process.

In an embodiment, the response signal includes at least one of: a Msg2 received in a physical random access channel (PRACH); a Msg4 received in the PRACH; a MsgB received in the PRACH; a response message of a 6G access signal; or a response message of a 6G access message. The response signal can be transmitted multiple times. The PRACH may be used for establishing only an energy transmission link or may be used for establishing a communication link and an energy transmission link. The Msg1, the Msg2, the Msg3 and the Msg4 correspond to system messages in a four-step link establishment process, and the MsgA and the MsgB correspond to system messages in a two-step link establishment process.

In an embodiment, step 110 includes steps 1110 and 1120.

In step 1110, a candidate request signal resource is determined in a candidate request signal resource pool.

In step 1120, the access request signal is transmitted on the determined candidate request signal resource.

In an embodiment, the method further includes the content described below.

In step 180, the candidate request signal resource pool is determined according to a broadcast message or a system message, where the candidate request signal resource pool includes a dedicated candidate request signal resource pool for a wireless energy transmission request, a candidate request signal resource pool for establishing a communication link or a dedicated candidate request signal resource pool for establishing a wireless energy transmission link.

In an embodiment, information carried by the response signal includes at least one of: establishing a communication link; or establishing a wireless energy transmission link.

In an embodiment, the access includes at least one of: communication transmission access or wireless energy transmission access. In this embodiment, only a wireless energy transmission link may be established, or a communication link and a wireless energy transmission link may be established.

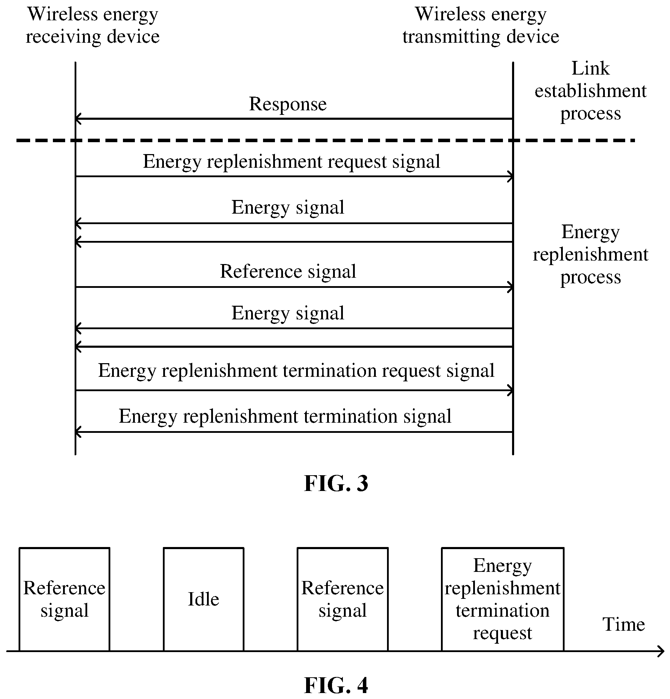

FIG. 3 is a schematic diagram of an energy replenishment process according to an embodiment. After the access is successful, the wireless energy transmitting device and the wireless energy receiving device begin the energy replenishment process. As shown in FIG. 3, the access request signal has already been transmitted in the link establishment process; after the wireless energy transmitting device transmits the response message to the energy receiving device to notify the energy receiving device that the link establishment (the link may be only a wireless energy transmission link or may also include a communication link and a wireless energy transmission link) is successful, if no energy transmission request signal is carried in the link establishment process, the wireless energy receiving device transmits an energy transmission request signal (an energy replenishment request signal), and the wireless energy transmitting device starts transmitting an energy signal after receiving the energy transmission request signal.

The wireless energy receiving device can transmit control information on a time-frequency resource designated by the wireless energy transmitting device in a process of receiving the energy signal for energy replenishment. FIG. 4 is a schematic diagram of control information according to an embodiment. As shown in FIG. 4, the control information includes transmitting a reference signal and an energy replenishment termination request (an energy transmission termination signal). The wireless energy receiving device can choose whether to transmit a reference signal or an energy replenishment termination request. When no transmission is performed, the resource is in an idle state. For example, the wireless energy receiving device can transmit a reference signal for helping the wireless energy transmitting device to estimate a channel and improving transmission efficiency when a received power is less than an expected received power. After full charge is achieved or the charge reaches a certain threshold, an energy replenishment termination request is transmitted. After receiving the energy replenishment termination request, the wireless energy transmitting device transmits an energy replenishment termination signal to the wireless energy receiving device. The energy replenishment termination signal is used for notifying the wireless energy receiving device that the energy transmission has been terminated.

In an embodiment, the wireless energy receiving device may also not establish a communication link with the wireless energy transmitting device during energy replenishment. The wireless energy receiving device is subjected to energy replenishment in the following manner: the wireless energy receiving device receives a system message broadcasted by the wireless energy transmitting device, where the system message includes an energy transmission parameter transmitted by the wireless energy transmitting device, and the wireless energy transmission parameter includes at least one of the maximum transmit power, the energy signal waveform, the transmission period, the transmit bandwidth or the transmit center frequency; after successfully receiving the system message, the wireless energy receiving device can start receiving the energy signal transmitted by the wireless energy transmitting device on the specified frequency and bandwidth.

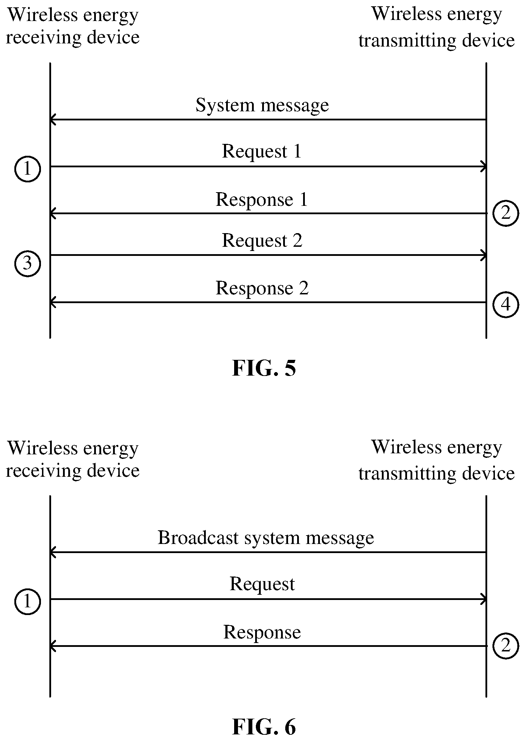

In an embodiment, the link establishment process may include four steps. FIG. 5 is a schematic diagram of a four-step link establishment process according to an embodiment. As shown in FIG. 5, the access request signal and the response signal can be transmitted multiple times. request1 and request2 are access request signals, and a wireless energy transmission request signal can be carried on at least one of request1 or request2. response1 and response2 are response signals corresponding to request1 and request2, respectively. The link establishment process is described below.

The wireless energy receiving device receives a system message transmitted by the wireless energy transmitting device, and the system message includes resource information of request1 transmitted by the wireless energy receiving device. The resource may be at least one of or any combination of time, a frequency or an orthogonal code. The system message may further include information of the request1 message such as the largest number of times of retransmission (the set number N) within a period of time, a retransmission waiting interval (a first duration T1) and a second duration (T2). In the request1 message, an identification code for temporarily identifying identity information of the wireless energy receiving device may be carried. A length and generation manner of the identification code may be acquired from the system message. The identification code may be generated through rules agreed upon by the wireless energy receiving device and the wireless energy transmitting device in advance or may also be allocated by the wireless energy transmitting device through control signaling. The control signaling may be RRC signaling, MAC-CE or DCI.

After receiving request1, the wireless energy transmitting device transmits response1 to the wireless energy receiving device. response1 may include information such as the transmit parameter of the energy transmitting device, and the transmit parameter includes information such as an optional transmit power, a transmit waveform, a transmission period, a transmit bandwidth and/or a transmit center frequency. response1 further includes temporary identity identification information of the wireless energy transmitting device. After receiving response 1, if the wireless energy receiving device finds that the temporary identity identification information in response1 is consistent with that of its own, the wireless energy receiving device transmits request2 to the wireless energy transmitting device. If the wireless energy receiving device still does not receive response1 after waiting for a period of time T1, the wireless energy receiving device repeats transmitting request1 until response1 is received. If the wireless energy receiving device repeats transmitting request1 N times and still does not receive response1, the wireless energy receiving device repeats the above operation again after a period of time T2. request2 includes the identity identification information of the energy receiving device.

After receiving request2, the wireless energy transmitting device can transmit the identity authentication message of the wireless energy receiving device back to a higher layer for operations such as authentication and user authentication, thereby acquiring whether the wireless energy receiving device has an energy replenishment right and acquiring information such as a user level. If the wireless energy receiving device has an energy replenishment right, the wireless energy transmitting device transmits response2 with the identity information of the wireless energy receiving device to the wireless energy receiving device, indicating that a link between the wireless energy receiving device and the wireless energy transmitting device is established successfully. response2 may also carry the energy transmission parameter of the wireless energy transmitting device. response2 may also carry information for instructing the wireless energy receiving device to transmit the reference signal, for example, information such as whether the reference signal is transmitted and a time-frequency resource, a time-domain granularity and a frequency-domain granularity for transmitting the reference signal. In addition, response2 may also carry a signaling transmit resource allocated to the wireless energy receiving device in the energy replenishment process. The signaling transmit resource includes information for transmitting the signaling such as time, a frequency, a bandwidth and/or an orthogonal code for scrambling. After receiving the response2 message, if the wireless energy receiving device finds that the identity information in response2 is consistent with that of its own, the wireless energy receiving device considers that it successfully establishes a link with the wireless energy transmitting device and can acquire the information of transmitting the reference signal and the signaling transmit resource allocated to it from response2 for controlling energy transmission. For example, a content of signaling transmission includes a transmit power, a transmit duration, a transmit frequency, a transmit bandwidth and/or an energy replenishment termination request signal. After the response2 message is successfully received and decoded, an energy transmission process begins.

In an embodiment, the access request signal may be transmitted only once. In this case, the link establishment process may include two steps. FIG. 6 is a schematic diagram of a two-step link establishment process according to an embodiment. As shown in FIG. 6, after receiving a system message, the wireless energy receiving device transmits an access request signal (request) to the wireless energy transmitting device, and the access request signal includes identity identification information of the wireless energy receiving device; after successfully receiving request, the wireless energy transmitting device performs identity authentication on the wireless energy receiving device; after successful authentication, the wireless energy transmitting device transmits a response signal (response), indicating that a link between the wireless energy receiving device and the wireless energy transmitting device is established successfully. Similarly, information carried in request may be the same as that carried in the request1 and request2 signals in the four-step link establishment process, and messages that may be carried in the response signal may be the same as those carried in the response1 and response2 signals in the four-step link establishment process.

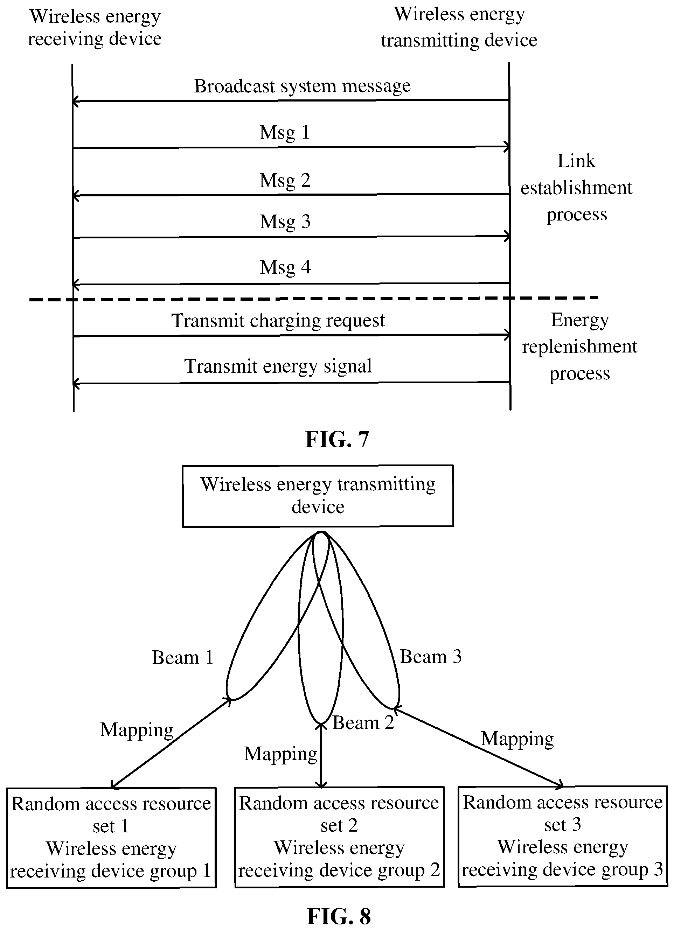

In an embodiment, the wireless energy receiving device is a user equipment (UE), and the wireless energy transmitting device is a base station. FIG. 7 is a schematic diagram illustrating the wireless energy transmission between a UE and a base station according to an embodiment. As shown in FIG. 7, a four-step link establishment process is performed between the UE and the base station. The UE receives a system message transmitted by the base station on a physical broadcast channel (PBCH), and the system message includes at least a generation manner of a Msg1 and a time-frequency resource for transmitting the Msg1. The base station may transmit the system message through broadcasting or beam scanning. When the system message is transmitted through beam scanning, different beams may correspond to different random access resource sets. FIG. 8 is a schematic diagram illustrating the correspondence between a beam and a random access resource set. As shown in FIG. 8, different beams may correspond to different random access message resource sets. The UE can select a random access resource set according to the best beam it receives for random access. The best beam may be a beam with the highest received power, a beam with the highest energy replenishment power, energy replenishment efficiency and a direct current power at a receiving end or a beam with the highest received signal strength indication (RSSI) and a reference signal received power. The random access resource includes time, a frequency and a root sequence of a preamble. The UE can complete system synchronization according to the received system message, acquire a root sequence of a random access preamble to generate the Msg1 and transmit the Msg1 on a designated time-frequency resource. The Msg1 is a random access preamble which is carried on a PRACH for transmission and includes an identifier for temporarily identifying the UE.

The temporary identifier for identifying the UE may be a temporary cell radio network temporary identifier (TC-RNTI). The identifier for identifying the UE may be another sequence, for example, a sequence generated by the UE according to its own characteristics, a pseudo-random sequence or a cyclic shift of a pseudo-random sequence. The characteristics of the UE may be a combination of one or more of a transmit frequency, bandwidth, transmission slot, system frame number and subcarrier spacing of the Msg1.

In some cases, the Msg1 may carry wireless energy replenishment indication information. For example, one bit exists in the Msg1 for indicating that the Msg1 is dedicatedly used for wireless energy replenishment. After receiving the Msg1, the base station can determine that the UE transmitting the Msg1 needs energy replenishment.

In some cases, the Msg1 may not be differentiated according to types. When the Msg1 is not differentiated according to types, the base station can learn that the UE is a charging UE through another message (for example, a Msg3) subsequently transmitted by the UE or a charging request.

The Msg1 needs to be transmitted on the time-frequency resource designated by the base station. In some cases, different time-frequency resources may be used for representing different types of the Msg1. For example, as shown in FIG. 2, a resource pool for transmitting the Msg1 is divided into a resource pool A and a resource pool B. A UE that transmits the Msg1 on the resource pool A is another type of UE, while a UE that transmits the Msg1 on the resource pool B is a UE that needs energy replenishment. In the figure, an abscissa of each resource grid in the figure may be one OFDM symbol period, one slot, one half frame or one frame, and an ordinate of each resource grid may represent one subcarrier or may be one resource block (RB).

After transmitting the Msg1, the UE starts a timer to start timing. If no response is received from the base station, the Msg1 is repeatedly transmitted after a first duration (T1) and performs retiming. If the UE successfully receives a Msg2, the UE stops transmitting the Msg1. If the UE still does not receive the Msg2 after repeatedly transmitting the Msg1 N times, the UE repeats the above process again after waiting for a second duration (T2).

In some cases, the UE may acquire T1, T2 and N from the system message or downlink signaling. The downlink signaling may be broadcast signaling, group signaling or dedicated signaling of the UE.

After successfully receiving the Msg1, the base station can acquire the temporary identifier for identifying the UE and transmit the Msg2 carrying the temporary identifier of the UE. What carries the Msg2 may be DCI of a physical layer, control signaling of a media access control (MAC) layer or control signaling of an RRC layer. If the control signaling of the RRC layer carries the Msg2, an RRC link needs to be established between the UE and the base station.

In some cases, the Msg2 may also carry resource information of the Msg3 transmitted by the UE for indicating a time-frequency resource block for the UE to transmit the Msg3.

In some cases, the Msg2 can instruct the UE to carry an uplink reference signal in the Msg3 for beam training, for example, carrying a sounding reference signal (SRS). In this case, in the Msg2, only one bit may exist for indicating whether to transmit the reference signal, or multiple bits may exist for indicating a transmission form of the uplink reference signal.

In some cases, the Msg2 may also carry information related to an energy replenishment signal of the base station, and the information includes information such as a supported transmit power, a waveform of a transmitted energy signal, a transmission period, a transmit frequency and/or a transmit bandwidth. After detecting the Msg2 transmitted by the base station, if the UE finds that the temporary identifier of the UE in the Msg2 is consistent with that of its own, the UE transmits the Msg3 to the base station and starts timing. What carries the Msg3 may be a physical uplink shared channel (PUSCH) or a PUCCH. Msg3 includes a unique identity identifier for identifying the UE. For example, the unique identity identifier may be a temporary mobile subscriber identity (TMSI), an international mobile subscriber identity (IMSI), a globally unique temporary UE identity (GUTI), a subscription permanent identifier (SUPI), a subscription concealed identifier (SUCI), 5G-GUTI, 5G-TMSI or 5G-S-TMSI. If the Msg2 message received by the UE carries the time-frequency resource for transmitting the Msg3, the UE transmits the Msg3 according to a time-frequency message specified by the Msg2. If the Msg2 does not indicate the time-frequency resource for the Msg3, the UE transmits the Msg3 by using a time-frequency resource which is the same as the time-frequency resource for transmitting the Msg1.

In some cases, for example, when no energy replenishment indication is carried in the Msg1, the UE can notify the base station in the Msg3 that the UE is an energy replenishment UE.

Optionally, the Msg3 may also carry an energy replenishment termination message for notifying the base station to stop transmitting the energy signal.

In some cases, the Msg3 may carry information related to RRC link establishment. For example, the UE may carry an RRC Setup Request message in the Msg3 to initiate a request to establish an RRC link. The RRC request may not be established between the base station and the UE, and the link may be established only through the four-step process in this embodiment.

In some cases, the Msg3 may also carry information related to the energy replenishment of the UE. The Msg3 may carry one or more of the expected energy replenishment time, the expected transmit power and the energy replenishment signal type according to different requirements of each UE for energy replenishment. The energy replenishment signal type may include one or more of: a bandwidth of the energy replenishment signal, a transmit waveform, a signal period, a duty cycle of the signal and a transmit frequency. The UE and the base station can feed back the above information according to a pre-agreed rule, for example, in a form of an index.

If the base station successfully receives the Msg3 of the UE, the base station can acquire the unique identity identifier of the UE. The base station transmits the basic information (for example, the identity identifier and the position information) of the UE back to a core network and starts an authentication process for verifying information such as a right and level of the UE to provide different services.

After successfully receiving the Msg3, the base station transmits a Msg4 to the UE. The Msg4 may be carried on a physical downlink control channel (PDCCH) or physical downlink shared channel (PDSCH) of the physical layer, or the control signaling of the MAC layer or the RRC layer. Identification information of the UE for contention resolution is carried in the Msg4 and may be, for example, a random access preamble ID (RAPID) transmitted by the UE. If the UE initiates an RRC access request signal in the Msg3, the base station may also carry an RRC link establishment message in the Msg4 to notify the UE that the RRC link establishment is successful or failed.

In some cases, the Msg4 may also carry information related to an energy replenishment signal of the base station, and the information includes information such as a supported transmit power, a waveform of a transmitted energy signal, a transmission period, a transmit frequency and/or a transmit bandwidth. The information related to the energy replenishment of the base station and carried in the Msg4 may be unique to each UE or common to a certain group of UEs.

Moreover, the Msg4 may also carry control signaling for instructing the UE to transmit a beam training sequence. Indication information includes information such as whether to transmit the training sequence, a time-frequency resource for transmitting the training sequence, a sequence type (for example, a ZC sequence or a gold sequence is used), a sequence length, the number of bits of cyclic shift, a transmission type (periodic or non-periodic transmission) and/or a sequence period.

In some cases, the Msg4 may also carry control signaling for indicating a time-frequency resource for UE to transmit a charging request signal. Moreover, the Msg4 may also carry control signaling for instructing the UE to transmit an uplink reference signal and indicating a time-frequency resource for the UE to transmit the uplink reference signal.

After receiving the Msg4 transmitted by the base station, if the UE detects that the RAPID in the Msg4 is consistent with that of its own, the UE considers that it has been successfully accessed, upgrades its TC-RNTI to a cell radio network temporary identifier (C-RNTI), and transmits a charging request signal to the base station. The charging request signal is a group of special sequences including the identification information of the UE for notifying the base station to transmit an energy signal to the UE. The identification information of the UE may be the C-RNTI of the UE or another identity identifier mentioned in this embodiment.

As shown in FIG. 4, in some cases, the UE can transmit a beam training signal to the base station for beam training before transmitting a charging request signal. After receiving the Msg4, the UE transmits a beam training signal to the base station. The beam training signal may be transmitted once or multiple times. After the beam training is finished, the UE transmits a charging request to the base station. Subsequently, the base station transmits an energy signal to start energy supply. In some cases, the beam training signal is also carried in the charging request signal for the base station to perform channel sounding and beam training.

In some cases, the charging request signal may also carry information related to the charging of the UE, for example, a power expected to be transmitted by the base station, an expected charging duration and a current received power. The charging request signal may also carry information related to a receiving capability of the UE which includes a receiving bandwidth, a receive frequency and the lowest energy replenishment power.

After receiving the charging request, the base station transmits an energy replenishment signal to the UE. The transmitted precoding of the energy replenishment signal is determined in two manners. 1. The transmitted precoding of the energy replenishment signal may be determined according to the resource for the UE to transmit the Msg1. The base station may acquire a beam corresponding to the resource for the Msg1 according to the resource for the UE to transmit the Msg1 and directly use this beam to transmit an energy replenishment signal to the UE.2. After performing channel estimation according to the beam training signal transmitted by the UE, the base station may acquire a channel matrix H and performs precoding according to the channel matrix H. For example, conjugate precoding may be used for downlink transmission. A frequency-domain signal transmitted by the base station may be represented as $s = \sqrt{P}H^H$, where $(\cdot)^H$ denotes a conjugate transpose of the matrix, and P is a transmit power. Alternatively, assuming that the UE has a single antenna, the base station has N antennas and a channel time domain tap of an i-th antenna acquired by the base station is $h_i(t)$, a time-domain signal transmitted by the i-th antenna of the base station may be represented as s(t)

$$s(t) = \sqrt{P}h_i(T - t)$$, where T is a sampling time of the base station, and t denotes a time.

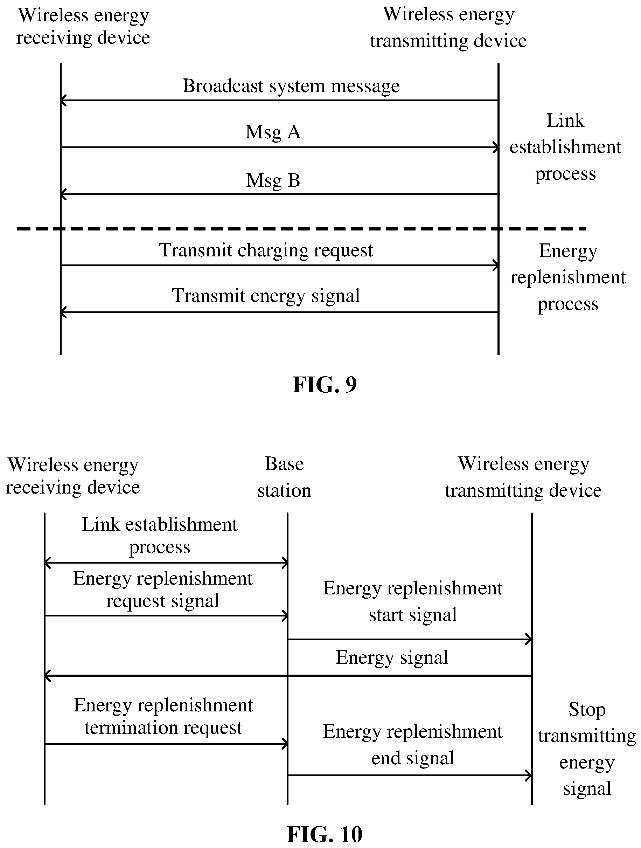

FIG. 9 is another schematic diagram illustrating the wireless energy transmission between a UE and a base station according to an embodiment. In FIG. 9, a two-step link establishment process is performed between the UE and the base station. A content of an MsgA message may be a combination of the Msg1 message and the Msg3 message in FIG. 7 or one of the Msg1 message or the Msg3 message in FIG. 7. Subsequently, the base station transmits a MsgB to the UE. A content of the MsgB may be a combination of the Msg2 message and the Msg4 message in FIG. 7 or one of the Msg2 message or the Msg4 message in FIG. 7.

In an embodiment, the Msg3 in FIG. 7 and the Msg1 in FIG. 9 may not carry information related to RRC link establishment, that is, an RRC link may not established between the wireless energy receiving device and the wireless energy transmitting device.

In this case, only a wireless energy transmission link instead of a communication link is established between the wireless energy receiving device and the wireless energy transmitting device.

FIG. 10 is a schematic diagram of an energy replenishment process according to an embodiment. In FIG. 10, a link establishment process is performed between the wireless energy receiving device (the first node) and the base station (the second node). For the link establishment process, reference may be made to any one of the preceding embodiments. After the link is successfully established, the wireless energy receiving device transmits an energy replenishment request signal (an energy transmission request signal) to the base station. After receiving the energy replenishment request signal, the base station transmits an energy replenishment start signal to the wireless energy transmitting device for instructing the wireless energy transmitting device to transmit an energy signal to the wireless energy receiving device. The signal may be carried in RRC signaling, MAC-CE, DCI or another form of control signal. When the wireless energy receiving device is fully charged or needs to terminate energy replenishment for other reasons, the wireless energy receiving device transmits an energy replenishment termination request (an energy transmission termination signal) to the base station. After receiving the energy replenishment termination request, the base station transmits an energy replenishment end signal to the wireless energy transmitting device. After receiving the energy replenishment end signal, the wireless energy transmitting device stops transmitting the energy signal to the wireless energy receiving device.

In some cases, when an energy replenishment request signal is carried in the link establishment request process, the wireless energy receiving device does not need to transmit an energy replenishment request signal to the base station again after the link is established successfully.

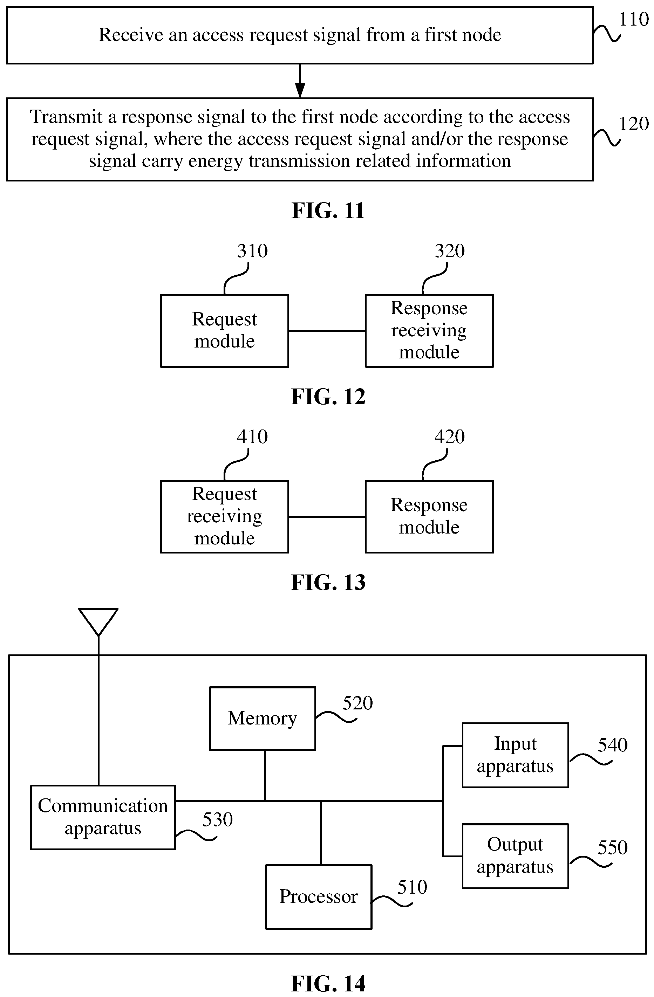

FIG. 11 is a flowchart of a wireless energy transmission method according to an embodiment. As shown in FIG. 11, the method provided in the embodiment includes steps 210 and 220. For details not exhaustively described in this embodiment, see any previous embodiment.

In step 210, an access request signal from a first node is received.

In step 220, a response signal is transmitted to the first node according to the access request signal.

The access request signal and/or the response signal carry energy transmission related information.

In this embodiment, the access request signal and/or the response signal carry energy transmission related information. By carrying the energy transmission related information in the access request signal and/or the response signal, parameters between the energy transmitting and receiving devices can be matched, thereby performing efficient and flexible energy transmission.

In an embodiment, the energy transmission related information carried by the access request signal includes at least one of: an energy transmission request signal, an energy transmission termination signal or an energy transmission parameter.

In an embodiment, the energy transmission related information carried by the access request signal is explicitly or implicitly carried in the access request signal.

In an embodiment, the energy transmission related information carried by the response signal includes at least one of: an energy transmission parameter or an energy transmission rejection message.

In an embodiment, the energy transmission related information includes the energy transmission parameter.

The energy transmission parameter includes at least one of the following information: an expected transmit power, an expected transmit bandwidth, an expected transmit frequency, an expected energy replenishment time or an expected transmit waveform.

The energy transmission parameter is explicitly or implicitly carried in the access request signal.

In an embodiment, the energy transmission related information includes the energy transmission parameter.

The energy transmission parameter includes at least one of the following transmit information of an energy signal: a transmit power, a transmit waveform, a transmit bandwidth, a transmit frequency or a transmit time domain position.

The energy transmission parameter is explicitly or implicitly carried in the access request signal.

In an embodiment, the energy transmission related information includes the energy transmission parameter.

The energy transmission parameter includes at least one of the following transmit-related information: a maximum transmit power, a transmit waveform set, a transmit bandwidth set, a carrier frequency set or a transmission period set.

The energy transmission related information is explicitly or implicitly carried in the response signal.

In an embodiment, the energy transmission related information includes the energy transmission parameter.

The energy transmission parameter includes at least one of the following transmit information of an energy signal: a transmit power, a transmit waveform, a transmit bandwidth, a transmit frequency, a transmit time domain position or measurement signal configuration information.

The energy transmission related information is explicitly or implicitly carried in the response signal.

In an embodiment, the method further includes the content described below.

In step 230, a measurement signal transmitted by the first node according to the measurement signal configuration information is received.

In an embodiment, mapping exists between the energy transmission parameter and a transmission resource.

In an embodiment, the method further includes the content described below.

In step 240, the first duration, the second duration and the preset number are indicated according to at least one of a broadcast system message or control signaling.

In an embodiment, the access request signal further carries identifier information, and the identifier information includes at least one of: an identity authentication message of the first node, terminal identifier information or terminal energy acquisition identifier information.

In an embodiment, if the identifier information in a response message corresponding to the access request signal is consistent with the identifier information carried by the access request signal, the access is successful.

In an embodiment, the access request signal carries a reference signal.

In an embodiment, the method further includes the content described below.

In step 250, a manner of transmitting the reference signal is indicated according to configuration signaling.

In an embodiment, precoding of an energy signal is determined by the second node according to a channel matrix determined based on a reference signal or determined according to a resource for transmitting the access request signal.

In an embodiment, the method further includes the content described below.

In step 260, an energy signal is transmitted according to transmit information of the energy signal.

In an embodiment, the access request signal includes at least one of: a Msg1 transmitted in a physical random access channel (PRACH); a Msg3 transmitted in the PRACH; a MsgA transmitted in the PRACH; a 6th generation mobile communication (6G) access signal; or a 6G access message.

In an embodiment, the response signal includes at least one of: a Msg2 received in a physical random access channel (PRACH); a Msg4 received in the PRACH; a MsgB received in the PRACH; a response message of a 6G access signal; or a response message of a 6G access message.

In an embodiment, the method further includes the content described below.

In step 270, the candidate request signal resource pool is indicated according to a broadcast message or a system message, where the candidate request signal resource pool includes a dedicated candidate request signal resource pool for a wireless energy transmission request, a candidate request signal resource pool for establishing a communication link or a dedicated candidate request signal resource pool for establishing a wireless energy transmission link.

In an embodiment, information carried by the response signal includes at least one of: establishing a communication link; or establishing a wireless energy transmission link.

In an embodiment, the access includes at least one of: communication transmission access or wireless energy transmission access.

Embodiments of the present application further provide a wireless energy transmission apparatus. FIG. 12 is a structure diagram of a wireless energy transmission apparatus according to an embodiment. As shown in FIG. 12, the wireless energy transmission apparatus includes a request module 310 and a response receiving module 320.

The request module 310 is configured to transmit an access request signal to a second node.

The response receiving module 320 is configured to receive a response signal from the second node.

The access request signal and/or the response signal carry energy transmission related information.

In the wireless energy transmission apparatus of this embodiment, the access request signal and/or the response signal carry energy transmission related information. By carrying the energy transmission related information in the access request signal and/or the response signal, parameters between the energy transmitting and receiving devices can be matched, thereby performing efficient and flexible energy transmission.

In an embodiment, the energy transmission related information carried by the access request signal includes at least one of: an energy transmission request signal, an energy transmission termination signal or an energy transmission parameter.

In an embodiment, the energy transmission related information carried by the access request signal is explicitly or implicitly carried in the access request signal.

In an embodiment, the energy transmission related information carried by the response signal includes at least one of: an energy transmission parameter or an energy transmission rejection message.

In an embodiment, the energy transmission related information includes the energy transmission parameter.

The energy transmission parameter includes at least one of the following information: an expected transmit power, an expected transmit bandwidth, an expected transmit frequency, an expected energy replenishment time or an expected transmit waveform.

The energy transmission parameter is explicitly or implicitly carried in the access request signal.

In an embodiment, the energy transmission related information includes the energy transmission parameter.

The energy transmission parameter includes at least one of the following transmit information of an energy signal: a transmit power, a transmit waveform, a transmit bandwidth, a transmit frequency or a transmit time domain position.

The energy transmission parameter is explicitly or implicitly carried in the access request signal.

In an embodiment, the energy transmission related information includes the energy transmission parameter.

The energy transmission parameter includes at least one of the following transmit-related information: a maximum transmit power, a transmit waveform set, a transmit bandwidth set, a carrier frequency set or a transmission period set.

The energy transmission related information is explicitly or implicitly carried in the response signal.

In an embodiment, the energy transmission related information includes the energy transmission parameter.

The energy transmission parameter includes at least one of the following transmit information of an energy signal: a transmit power, a transmit waveform, a transmit bandwidth, a transmit frequency, a transmit time domain position or measurement signal configuration information.

The energy transmission related information is explicitly or implicitly carried in the response signal.

In an embodiment, the apparatus further includes a transmission module.

The transmission module is configured to transmit a measurement signal according to the measurement signal configuration information.

In an embodiment, mapping exists between the energy transmission parameter and a transmission resource.

In an embodiment, the apparatus further includes a first retransmission module and a second retransmission module.

The first retransmission module is configured to retransmit the access request signal after a first duration if the response signal is not received after the access request signal is transmitted.

The second retransmission module is configured to retransmit the access request signal again after a second duration or abandon accessing the node if the response signal is not received after the number of retransmissions of the access request signal reaches the preset number.

In an embodiment, the apparatus further includes a parameter determination module.

The parameter determination module is configured to determine the first duration, the second duration and the preset number according to at least one of a broadcast system message or control signaling.

In an embodiment, the access request signal further carries identifier information, and the identifier information includes at least one of: an identity authentication message of the first node, terminal identifier information or terminal energy acquisition identifier information.

In an embodiment, if the identifier information in a response message corresponding to the access request signal is consistent with the identifier information carried by the access request signal, the access is successful.

In an embodiment, the access request signal carries a reference signal.

In an embodiment, the apparatus further includes a manner determination module.

The manner determination module is configured to determine a manner of transmitting the reference signal according to configuration signaling of the second node.

In an embodiment, precoding of an energy signal is determined by the second node according to a channel matrix determined based on a reference signal or determined according to a resource for transmitting the access request signal.

In an embodiment, the apparatus further includes an energy receiving module.

The energy receiving module is configured to acquire transmit information of an energy signal and receive the energy signal according to the transmit information if the response signal is received successfully.

In an embodiment, the access request signal includes at least one of: a Msg1 transmitted in a physical random access channel (PRACH); a Msg3 transmitted in the PRACH; a MsgA transmitted in the PRACH; a 6th generation mobile communication (6G) access signal; or a 6G access message.

In an embodiment, the response signal includes at least one of: a Msg2 received in a physical random access channel (PRACH); a Msg4 received in the PRACH; a MsgB received in the PRACH; a response message of a 6G access signal; or a response message of a 6G access message.

In an embodiment, the request module 310 includes a resource determination unit and a request unit.

The resource determination unit is configured to determine a candidate request signal resource in a candidate request signal resource pool.

The request unit is configured to transmit the access request signal on the determined candidate request signal resource.

In an embodiment, the apparatus further includes a resource pool determination module.

The resource pool determination module is configured to determine the candidate request signal resource pool according to a broadcast message or a system message, where the candidate request signal resource pool includes a dedicated candidate request signal resource pool for a wireless energy transmission request, a candidate request signal resource pool for establishing a communication link or a dedicated candidate request signal resource pool for establishing a wireless energy transmission link.

In an embodiment, information carried by the response signal includes at least one of: establishing a communication link; or establishing a wireless energy transmission link.

In an embodiment, the access includes at least one of: communication transmission access or wireless energy transmission access.

The wireless energy transmission apparatus provided in this embodiment and the wireless energy transmission method provided in the preceding embodiments belong to the same concept. For technical details not described in detail in this embodiment, reference may be made to any one of the preceding embodiments. The embodiment has the same beneficial effects as the performed wireless energy transmission method.

Embodiments of the present application further provide a wireless energy transmission apparatus. FIG. 13 is a structure diagram of a wireless energy transmission apparatus according to an embodiment. As shown in FIG. 13, the wireless energy transmission apparatus includes a request receiving module 410 and a response module 420.

The request receiving module 410 is configured to receive an access request signal from a first node.

The response module 420 is configured to transmit a response signal to the first node according to the access request signal.

At least one of the access request signal or the response signal carries energy transmission related information.

In the wireless energy transmission apparatus of this embodiment, the access request signal and/or the response signal carry energy transmission related information. By carrying the energy transmission related information in the access request signal and/or the response signal, parameters between the energy transmitting and receiving devices can be matched, thereby performing efficient and flexible energy transmission.

In an embodiment, the energy transmission related information carried by the access request signal includes at least one of: an energy transmission request signal, an energy transmission termination signal or an energy transmission parameter.

In an embodiment, the energy transmission related information carried by the access request signal is explicitly or implicitly carried in the access request signal.

In an embodiment, the energy transmission related information carried by the response signal includes at least one of: an energy transmission parameter or an energy transmission rejection message.

In an embodiment, the energy transmission related information includes the energy transmission parameter.

The energy transmission parameter includes at least one of the following information: an expected transmit power, an expected transmit bandwidth, an expected transmit frequency, an expected energy replenishment time or an expected transmit waveform.

The energy transmission parameter is explicitly or implicitly carried in the access request signal.

In an embodiment, the energy transmission related information includes the energy transmission parameter.

The energy transmission parameter includes at least one of the following transmit information of an energy signal: a transmit power, a transmit waveform, a transmit bandwidth, a transmit frequency or a transmit time domain position.

The energy transmission parameter is explicitly or implicitly carried in the access request signal.

In an embodiment, the energy transmission related information includes the energy transmission parameter.

The energy transmission parameter includes at least one of the following transmit-related information: a maximum transmit power, a transmit waveform set, a transmit bandwidth set, a carrier frequency set or a transmission period set.

The energy transmission related information is explicitly or implicitly carried in the response signal.

In an embodiment, the energy transmission related information includes the energy transmission parameter.

The energy transmission parameter includes at least one of the following transmit information of an energy signal: a transmit power, a transmit waveform, a transmit bandwidth, a transmit frequency, a transmit time domain position or measurement signal configuration information.

The energy transmission related information is explicitly or implicitly carried in the response signal.

In an embodiment, the apparatus further includes a receiving module.

The receiving module is configured to receive a measurement signal transmitted by the first node according to the measurement signal configuration information.

In an embodiment, mapping exists between the energy transmission parameter and a transmission resource.

In an embodiment, the apparatus further includes a parameter indication module.

The parameter indication module is configured to indicate the first duration, the second duration and the preset number according to at least one of a broadcast system message or control signaling.

In an embodiment, the access request signal further carries identifier information, and the identifier information includes at least one of: an identity authentication message of the first node, terminal identifier information or terminal energy acquisition identifier information.

In an embodiment, if the identifier information in a response message corresponding to the access request signal is consistent with the identifier information carried by the access request signal, the access is successful.

In an embodiment, the access request signal carries a reference signal.

In an embodiment, the apparatus further includes a manner indication module.

The manner indication module is configured to indicate a manner of transmitting the reference signal according to configuration signaling.

In an embodiment, precoding of an energy signal is determined by the second node according to a channel matrix determined based on a reference signal or determined according to a resource for transmitting the access request signal.

In an embodiment, the apparatus further includes an energy transmission module.

The energy transmission module is configured to transmit an energy signal according to transmit information of the energy signal.

In an embodiment, the access request signal includes at least one of: a Msg1 transmitted in a physical random access channel (PRACH); a Msg3 transmitted in the PRACH; a MsgA transmitted in the PRACH; a 6th generation mobile communication (6G) access signal; or a 6G access message.

In an embodiment, the response signal includes at least one of: a Msg2 received in a physical random access channel (PRACH); a Msg4 received in the PRACH; a MsgB received in the PRACH; a response message of a 6G access signal; or a response message of a 6G access message.

In an embodiment, the apparatus further includes a resource pool indication module.

The resource pool indication module is configured to indicate the candidate request signal resource pool according to a broadcast message or a system message, where the candidate request signal resource pool includes a dedicated candidate request signal resource pool for a wireless energy transmission request, a candidate request signal resource pool for establishing a communication link or a dedicated candidate request signal resource pool for establishing a wireless energy transmission link.

In an embodiment, information carried by the response signal includes at least one of: establishing a communication link; or establishing a wireless energy transmission link.

In an embodiment, the access includes at least one of: communication transmission access or wireless energy transmission access.

The wireless energy transmission apparatus provided in this embodiment and the wireless energy transmission method provided in the preceding embodiments belong to the same concept. For technical details not described in detail in this embodiment, reference may be made to any one of the preceding embodiments. The embodiment has the same beneficial effects as the performed wireless energy transmission method.

Embodiments of the present application further provide a communication device. FIG. 14 is a structure diagram of hardware of a communication device according to an embodiment. As shown in FIG. 14, the communication device provided in the present application includes a processor 510 and a memory 520. One or more processors 510 may be provided in the communication device. In FIG. 14, one processor 510 is used as an example. The memory 520 is configured to store one or more programs. The one or more programs are executed by the one or more processors 510 to cause the one or more processors 510 to implement the wireless energy transmission method provided in embodiments of the present application.

The communication device further includes a communication apparatus 530, an input apparatus 540, and an output apparatus 550.

The processor 510, the memory 520, the communication apparatus 530, the input apparatus 540 and the output apparatus 550 in the communication device may be connected through a bus or in other manners, and the connection through the bus is shown as an example in FIG. 14.

The input apparatus 540 may be used for receiving input digital or character information and generating keying signal input related to user settings of the communication device and function control of the communication device. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the storage apparatus 520 may be configured to store software programs, computer-executable programs and modules, such as program instructions/modules (for example, the request module 310 and the response receiving module 320 that are in the wireless energy transmission apparatus) corresponding to the wireless energy transmission method according to embodiments of the present application. The memory 520 may include a program storage region and a data storage region. The program storage region may store an operating system and an application program required by at least one function. The data storage region may store data created according to the use of the communication device. Additionally, the memory 520 may include a high-speed random-access memory and may also include a nonvolatile memory, such as at least one magnetic disk memory, a flash memory, or another nonvolatile solid-state memory. In some examples, the memory 520 may further include memories remotely disposed relative to the processor 510, and these remote memories may be connected to the communication device via a network. Examples of the network include, but are not limited to, the Internet, an intranet, a local area network, a mobile communication network, and a combination thereof.

Embodiments of the present application further provide a storage medium storing a computer program which, when executed by a processor, causes the processor to implement the wireless energy transmission method provided in any one of the embodiments of the present application. The method includes: transmitting an access request signal to a second node; and receiving a response signal from the second node. The access request signal and/or the response signal carry energy transmission related information.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared or semiconductor system, apparatus or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory, a magnetic memory, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier, where the data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included in the computer-readable medium may be transmitted in any suitable medium including, but not limited to, a wireless medium, a wire, an optical cable, radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN) or may be connected to an external computer (for example, via the Internet provided by an Internet service provider).

The preceding are example embodiments of the present application and are not intended to limit the scope of the present application.

It is to be understood by those skilled in the art that the term "user equipment" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A wireless energy transmission method, the method being applied to a first node and comprising:

   transmitting an access request signal to a second node; and
   receiving a response signal from the second node;
   wherein at least one of the access request signal or the response signal carries energy transmission related information.

2. The wireless energy transmission method according to claim 1, wherein the access request signal carries the energy transmission related information, and the energy transmission related information comprises at least one of:
   an energy transmission request signal, an energy transmission termination signal or an energy transmission parameter.

3. The wireless energy transmission method according to claim 1, wherein the access request signal carries the energy transmission related information, and the energy transmission related information is explicitly or implicitly carried in the access request signal.

4. The wireless energy transmission method according to claim 1, wherein the response signal carries the energy transmission related information, and the energy transmission related information comprises at least one of: an energy transmission parameter or an energy transmission rejection message.

5. The wireless energy transmission method according to claim 2, wherein the energy transmission related information comprises the energy transmission parameter;

   the energy transmission parameter comprises at least one of the following information: an expected transmit power, an expected transmit bandwidth, an expected transmit frequency, an expected energy replenishment time or an expected transmit waveform; and
the energy transmission parameter is explicitly or implicitly carried in the access request signal.

6. The wireless energy transmission method according to claim 2, wherein the energy transmission related information comprises the energy transmission parameter;

the energy transmission parameter comprises at least one of the following transmit information of an energy signal: a transmit power, a transmit waveform, a transmit bandwidth, a transmit frequency or a transmit time domain position; and
the energy transmission parameter is explicitly or implicitly carried in the access request signal.

7. The wireless energy transmission method according to claim 4, wherein the energy transmission related information comprises the energy transmission parameter;

the energy transmission parameter comprises at least one of the following transmit-related information: a maximum transmit power, a transmit waveform set, a transmit bandwidth set, a carrier frequency set or a transmission period set; and
the energy transmission related information is explicitly or implicitly carried in the response signal.

8. The wireless energy transmission method according to claim 4, wherein the energy transmission related information comprises the energy transmission parameter;

the energy transmission parameter comprises at least one of the following transmit information of an energy signal: a transmit power, a transmit waveform, a transmit bandwidth, a transmit frequency, a transmit time domain position or measurement signal configuration information; and
the energy transmission related information is explicitly or implicitly carried in the response signal.

9. The wireless energy transmission method according to claim 8, wherein the energy transmission parameter comprises the measurement signal configuration information, and the wireless energy transmission method further comprises:
transmitting a measurement signal according to the measurement signal configuration information.

10. The wireless energy transmission method according to any one of claims 5 to 9, wherein mapping exists between the energy transmission parameter and a transmission resource.

11. The wireless energy transmission method according to claim 1, further comprising:

in response to not receiving the response signal after transmitting the access request signal, retransmitting the access request signal after a first duration; and
in response to not receiving the response signal after a number of retransmissions of the access request signal reaches a preset number, retransmitting the access request signal again after a second duration or abandoning accessing the second node.

12. The wireless energy transmission method according to claim 11, further comprising:
determining the first duration, the second duration and the preset number according to at least one of a broadcast system message or control signaling.

13. The wireless energy transmission method according to claim 1, wherein the access request signal further carries identifier information, and the identifier information comprises at least one of: an identity authentication message of the first node, terminal identifier information or terminal energy acquisition identifier information.

14. The wireless energy transmission method according to claim 13, further comprising: in response to determining that identifier information in a response message corresponding to the access request signal is consistent with the identifier information carried by the access request signal, determining that the second node is successfully accessed.

15. The wireless energy transmission method according to claim 1, wherein the access request signal carries a reference signal.

16. The wireless energy transmission method according to claim 15, further comprising: determining a manner of transmitting the reference signal according to configuration signaling of the second node.

17. The wireless energy transmission method according to claim 1, wherein precoding of an energy signal is determined by the second node according to a channel matrix determined based on a reference signal or determined according to a resource for transmitting the access request signal.

18. The wireless energy transmission method according to claim 1, further comprising:
in response to successfully receiving the response signal, acquiring transmit information of an energy signal, and receiving the energy signal according to the transmit information.

19. The wireless energy transmission method according to claim 1, wherein the access request signal comprises at least one of:

   a Msg1 transmitted in a physical random access channel, PRACH;
   a Msg3 transmitted in the PRACH;
   a MsgA transmitted in the PRACH;
   a 6th generation mobile communication, 6G, access signal; or
   a 6G access message.

20. The wireless energy transmission method according to claim 1, wherein the response signal comprises at least one of:

   a Msg2 received in a PRACH;
   a Msg4 received in the PRACH;
   a MsgB received in the PRACH;
   a response message of a 6G access signal; or
   a response message of a 6G access message.

21. The wireless energy transmission method according to claim 1, wherein transmitting the access request signal to the second node comprises:

   determining a candidate request signal resource in a candidate request signal resource pool; and
   transmitting the access request signal to the second node on the determined candidate request signal resource.

22. The wireless energy transmission method according to claim 21, further comprising:
determining the candidate request signal resource pool according to a broadcast message or a system message, wherein the candidate request signal resource pool comprises one of: a dedicated candidate request signal resource pool for a wireless energy transmission request, a candidate request signal resource pool for establishing a communication link or a dedicated candidate request signal resource pool for establishing a wireless energy transmission link.

23. The wireless energy transmission method according to claim 1, wherein information carried by the response signal comprises at least one of: establishing a communication link; or establishing a wireless energy transmission link.

24. The wireless energy transmission method according to claim 1, wherein the access request signal comprises at least one of: a communication transmission access request signal or a wireless energy transmission access request signal.

25. A wireless energy transmission method, the wireless energy transmission method being applied to a second node and comprising:

   receiving an access request signal from a first node; and
   transmitting a response signal to the first node according to the access request signal;
   wherein at least one of the access request signal or the response signal carries energy transmission related information.

26. A wireless energy transmission apparatus, comprising:

   a request module configured to transmit an access request signal to a second node; and

a response receiving module configured to receive a response signal from the second node;
wherein at least one of the access request signal or the response signal carries energy transmission related information.

27. A wireless energy transmission apparatus, comprising:

a request receiving module configured to receive an access request signal from a first node; and
a response module configured to transmit a response signal to the first node according to the access request signal;
wherein at least one of the access request signal or the response signal carries energy transmission related information.

28. A communication device, comprising a memory and at least one processor;

wherein the memory is configured to store at least one program; and
wherein when executed by the at least one processor, the at least one program causes the at least one processor to perform the wireless energy transmission method according to any one of claims 1 to 25.

29. A computer-readable storage medium storing a computer program which, when executed by a processor, causes the processor to implement the wireless energy transmission method according to any one of claims 1 to 25.

Transmit an access request signal to a second node ⟍110

Receive a response signal from the second node, where the access request signal and/or the response signal carry energy transmission related information ⟍120

**FIG. 1**

Frequency

| Resource 1 | Resource 2 | ///// | ///// |
| Resource 3 | Resource 4 | ///// | ///// |

Time

Resource pool A   Resource pool B

**FIG. 2**

Wireless energy
receiving device

Wireless energy
transmitting device

Link
establishment
process

Response

— — — — — — — — — — — — — — — — — — — — — — — — — — — — — —

Energy replenishment request signal

Energy signal

Energy
replenishment
process

Reference signal

Energy signal

Energy replenishment termination request signal

Energy replenishment termination signal

**FIG. 3**

| Reference signal | Idle | Reference signal | Energy replenishment termination request | Time |

**FIG. 4**

Wireless energy
receiving device

Wireless energy
transmitting device

System message

① Request 1

Response 1 ②

③ Request 2

Response 2 ④

**FIG. 5**

Wireless energy
receiving device

Wireless energy
transmitting device

Broadcast system message

① Request

Response ②

**FIG. 6**

Wireless energy
receiving device

Wireless energy
transmitting device

Broadcast system message

Msg 1

Msg 2

Msg 3

Msg 4

Link
establishment
process

Transmit charging request

Transmit energy signal

Energy
replenishment
process

**FIG. 7**

Wireless energy transmitting
device

Beam 1

Beam 3

Mapping

Beam 2

Mapping

Mapping

Random access resource
set 1
Wireless energy
receiving device group 1

Random access resource
set 2
Wireless energy
receiving device group 2

Random access resource
set 3
Wireless energy
receiving device group 3

**FIG. 8**

Wireless energy
receiving device

Wireless energy
transmitting device

Broadcast system message

Msg A

Link
establishment
process

Msg B

– – – – – – – – – – – – – – – – – – – – – – – – – –

Transmit charging request

Energy
replenishment
process

Transmit energy signal

**FIG. 9**

Wireless energy
receiving device

Base
station

Wireless energy
transmitting device

Link establishment
process

Energy replenishment
request signal

Energy replenishment
start signal

Energy signal

Energy replenishment
termination request

Energy replenishment
end signal

Stop
transmitting
energy
signal

**FIG. 10**

Receive an access request signal from a first node ⟶ 110

Transmit a response signal to the first node according to the access request signal, where the access request signal and/or the response signal carry energy transmission related information ⟶ 120

**FIG. 11**

310

Request module

320

Response receiving module

**FIG. 12**

410

Request receiving module

420

Response module

**FIG. 13**

520 — Memory

540 — Input apparatus

530 — Communication apparatus

550 — Output apparatus

510 — Processor

**FIG. 14**

EP 4 629 702 A1

# INTERNATIONAL SEARCH REPORT

International application No.

**PCT/CN2023/138142**

### A. CLASSIFICATION OF SUBJECT MATTER

H04W 48/10(2009.01)i; H02J50/20(2016.01)i

According to International Patent Classification (IPC) or to both national classification and IPC

### B. FIELDS SEARCHED

Minimum documentation searched (classification system followed by classification symbols)

IPC:H04W H02J

Documentation searched other than minimum documentation to the extent that such documents are included in the fields searched

Electronic data base consulted during the international search (name of data base and, where practicable, search terms used)

CNTXT, VEN, CNABS, ENTXT, VCN, CNKI: 能量, 电量, 电力, 传输, 接入, 请求, 响应, 参数, 配置, 功率, 期望, 带宽, 时间, 波形, MSG, energy, charge, power, transmission, access, request, response, parameters, configuration, bandwidth, time, waveform

### C. DOCUMENTS CONSIDERED TO BE RELEVANT

| Category* | Citation of document, with indication, where appropriate, of the relevant passages | Relevant to claim No. |
|---|---|---|
| X | CN 113841317 A (BEIJING XIAOMI MOBILE SOFTWARE CO., LTD.) 24 December 2021 (2021-12-24) <br> description, paragraphs 36-59, and figure 1 | 1-29 |
| A | CN 111385830 A (HUAWEI TECHNOLOGIES CO., LTD.) 07 July 2020 (2020-07-07) <br> entire document | 1-29 |
| A | US 2015142198 A1 (GREBEL, H. et al.) 21 May 2015 (2015-05-21) <br> entire document | 1-29 |
| A | US 2020374921 A1 (HUAWEI TECHNOLOGIES CO., LTD.) 26 November 2020 (2020-11-26) <br> entire document | 1-29 |

☐ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 March 2024** | **20 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138142**

| Patent document cited in search report | | | Publication date (day/month/year) | Patent family member(s) | | | Publication date (day/month/year) |
|---|---|---|---|---|---|---|---|
| CN | 113841317 | A | 24 December 2021 | WO | 2023019449 | A1 | 23 February 2023 |
| CN | 111385830 | A | 07 July 2020 | WO | 2020135850 | A1 | 02 July 2020 |
| | | | | CN | 115396927 | A | 25 November 2022 |
| US | 2015142198 | A1 | 21 May 2015 | US | 9577428 | B2 | 21 February 2017 |
| | | | | US | 2017126012 | A1 | 04 May 2017 |
| US | 2020374921 | A1 | 26 November 2020 | EP | 3627950 | A1 | 25 March 2020 |
| | | | | EP | 3627950 | A4 | 20 May 2020 |
| | | | | EP | 3627950 | B1 | 02 June 2021 |
| | | | | WO | 2019006807 | A1 | 10 January 2019 |
| | | | | US | 11395331 | B2 | 19 July 2022 |
| | | | | CN | 110832942 | A | 21 February 2022 |

Form PCT/ISA/210 (patent family annex) (July 2022)